(19) Europäisches Patentamt / European Patent Office / Office européen des brevets

(11) **EP 2 928 139 B1**

(12) **EUROPEAN PATENT SPECIFICATION**

(45) Date of publication and mention
of the grant of the patent:
**30.09.2020 Bulletin 2020/40**

(51) Int Cl.:
*H04L 25/02* *(2006.01)* *H04B 17/00* *(2015.01)*
*H04L 25/03* *(2006.01)*

(21) Application number: **14162742.2**

(22) Date of filing: **31.03.2014**

(54) **Method and a device for cancelling a narrow band interference in a single carrier signal**

Verfahren und Vorrichtung zur Aufhebung einer Schmalbandinterferenz in einem Einzelträgersignal

Procédé et dispositif pour annuler une interférence à bande étroite dans un signal à porteuse unique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.10.2015 Bulletin 2015/41**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **Castelain, Damien**
**35802 Rennes Cedex (FR)**

(74) Representative: **Cabinet Le Guen Maillet**
**3, impasse de la Vigie**
**CS 71840**
**35418 Saint-Malo Cedex (FR)**

(56) References cited:
• **YAO RUGUI ET AL: "A novel iterative threshold
for anti-jamming algorithm and its
implementation on FPGA", 16TH
INTERNATIONAL CONFERENCE ON ADVANCED
COMMUNICATION TECHNOLOGY, GLOBAL IT
RESEARCH INSTITUTE (GIRI), 16 February 2014
(2014-02-16), pages 820-825, XP032581248, DOI:
10.1109/ICACT.2014.6779074 [retrieved on
2014-03-26]**
• **TOBIAS HIDALGO STITZ ET AL: "Mitigation of
Narrowband Interference in Filter Bank Based
Multicarrier Systems", COMMUNICATIONS,
2006. ICC '06. IEEE INTERNATIONAL
CONFERENCE ON, IEEE, PI, 1 June 2006
(2006-06-01), pages 3241-3246, XP031025569,
ISBN: 978-1-4244-0354-7**
• **DUHO RHEE ET AL: "Iterative narrowband
jamming rejection technique for coded
OFDMA-CDM systems", MILITARY
COMMUNICATIONS CONFERENCE, 2009.
MILCOM 2009. IEEE, IEEE, PISCATAWAY, NJ,
USA, 18 October 2009 (2009-10-18), pages 1-6,
XP031609645, ISBN: 978-1-4244-5238-5**

**Description**

The present invention relates generally to a method and a device for cancelling a narrow band interference in a single carrier signal representative of received symbols.

The present invention is related to narrow band interferer cancellation in telecommunication systems based on Single Carrier modulation the demodulation of which is implemented in the frequency domain.

The paper of YAO RUGUI published in the 16th international conference on advance communication technology global IT research institute on February 16, 2014 discloses a novel iterative threshold for anti-jamming algorithm and its implementation on FPGA

For example and in a non-limitative way, the present invention may be applied to Single Carrier orthogonal frequency division multiplex modulation scheme (SC-OFDM).

SC-OFDM is a modulation scheme with OFDM-type multiplexing but single-carrier-like envelope. It can be implemented either in the time-domain or in the frequency-domain. In the last case, it is also called DFT-spread OFDM, or SC-FDE (Single Carrier Frequency Domain Equalisation) or SC-FDMA (Single Carrier Frequency Division Multiple Access). The frequency domain implementation is generally preferred, especially in the receiver.

The present invention may be applied to Single Carrier Time Division Multiplex (SC-TDM) if equalization is performed in the frequency domain.

The present invention finds application into wireless cellular telecommunication networks like 3GPP/LTE uplink transmission or broadcasting system like Digital Video Broadcasting Next Generation Handheld (DVB NGH) systems and satellite communication systems.

The present invention aims at providing a method and a device which enable the cancellation of at least one narrow band interference in a single carrier signal.

Since the features and advantages relating to the computer programs are the same as those set out above related to the methods and apparatus according to the invention, they will not be repeated here.

The characteristics of the invention will emerge more clearly from a reading of the following description of an example of embodiment, the said description being produced with reference to the accompanying drawings, among which :

  Fig. 1 represents a wireless link in which the present invention is implemented;
  Fig. 2 is a diagram representing the architecture of a receiver in which the present invention is implemented ;
  Fig. 3 discloses a block diagram of components of the wireless interface of the receiver;
  Fig. 4 represents an example of a received signal with narrow band interference;
  Fig. 5 discloses a block diagram of components of the adaptive threshold determination and truncation module according to the present invention;
  Fig. 6 discloses an example of an algorithm executed by a destination according to the present invention.

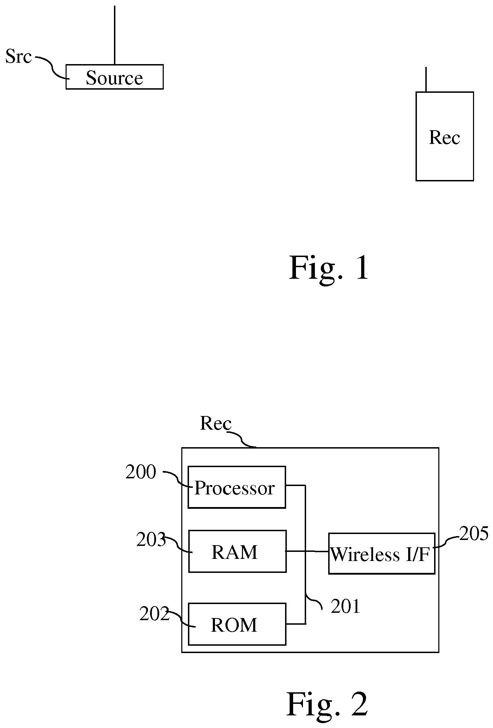

**Fig. 1** represents a wireless link in which the present invention is implemented.

The present invention will be disclosed in an example in which the signals transferred by a source Src are transferred to at least one receiver Rec.

Only one receiver Rec is shown in the Fig. 1 for the sake of simplicity, but signals may be received by a more important number of receivers Rec.

The receiver Rec may be included in a fixed or mobile terminal to which data like video signals are transferred.

Data and possibly information enabling an estimate of the wireless link between a source and one receiver are transferred using single carrier modulation.

According to the invention, the receiver Rec:

-    transforms the received symbols from the time domain to the frequency domain into received symbols in the frequency domain,
-    determines a threshold based on the received symbols in the frequency domain,
-    truncates the amplitudes of the received symbols in the frequency domain at the determined threshold,
-    performs a channel estimation based on the truncated received symbols in the frequency domain.

**Fig. 2** is a diagram representing the architecture of a receiver in which the present invention is implemented.

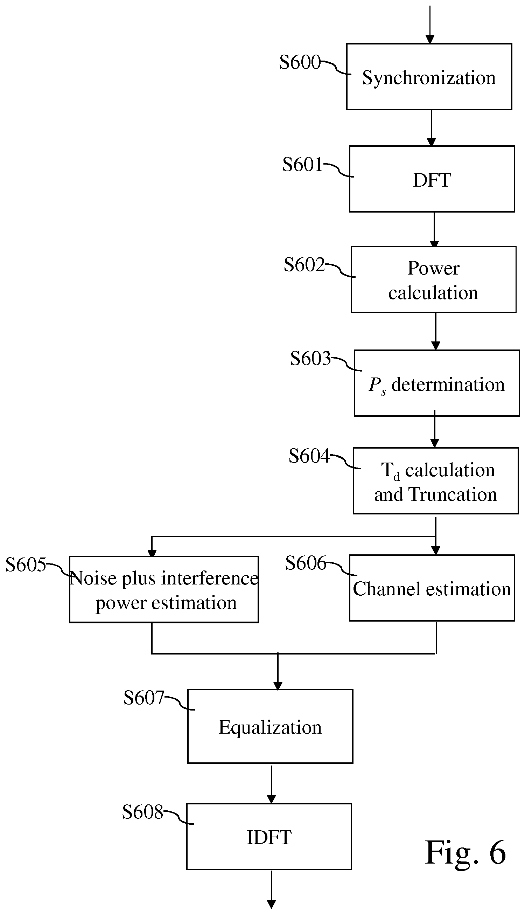

The receiver Rec has, for example, an architecture based on components connected together by a bus 201 and a processor 200 controlled by the program as disclosed in Fig. 6.

It has to be noted here that the receiver Rec may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the program related to the algorithm as disclosed in Fig. 6.

The processor 200 controls the operation of the wireless interface 205.

The read only memory 202 contains instructions of the program related to the algorithm as disclosed in Fig. 6, which are transferred, when the receiver Rec is powered on, to the random access memory 203.

Any and all steps of the algorithms described hereafter with regard to Fig. 6. may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the receiver Rec includes circuitry, or a device including circuitry, causing the receiver Rec to perform the steps of the algorithms described hereafter with regard to Fig. 6.

Such a device including circuitry causing the receiver Rec to perform the steps of the algorithm described hereafter with regard to Fig. 6 may be an external device connectable to the receiver Rec.

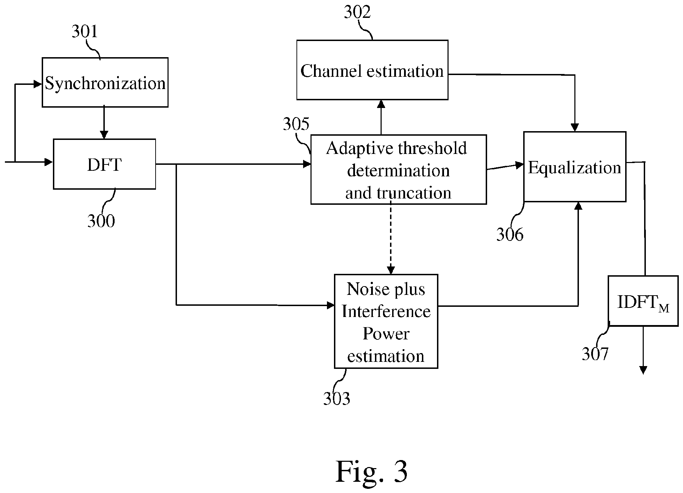

The wireless interface 205 comprises components as disclosed in Fig. 3.

**Fig. 3** discloses a block diagram of components of the wireless interface of the receiver.

The wireless interface 205 comprises a synchronization module 301 which is in charge of synchronizing a DFT module 300 of the wireless interface 205 on the received symbols.

The DFT module 300 transforms the received symbols from the time domain to the frequency domain into received symbols in the frequency domain $y_k$ where $k$ denotes the index of subcarrier. The received symbols are obtained by transforming the received single carrier signal into received symbols.

The received symbols in the frequency domain may be represented by:

$$y_k = h_k x_k + \upsilon_k$$

Where $h_k$ is the channel response for carrier of index $k$, and where $v_k$ is the additive noise at the same frequency. The term $v_k$ is the addition of the Additive White Gaussian Noise (AWGN) noise e.g. the thermal noise and the narrow band interferer. Because of the narrow band interferer, the variance of $v_k$ is frequency-dependent and is denoted by $\sigma_k^2$.

The received symbols in the frequency domain may be provided to a frequency dependent noise plus interference power estimation module 303 and to, according to the present invention, an adaptive threshold determination and truncation module 305.

The adaptive threshold reduces the amount of narrow band interference in the received symbols which are either data or pilot symbols and then improves the channel estimation and the accuracy of the estimated data after equalization. Thus it improves the overall performance of the reception.

The output of the adaptive threshold determination and truncation module 305 is provided to an equalization module. For example the equalization module is a Minimum Mean Square Error equalization module 306 which equalizes in the frequency domain and provides samples expressed by:

$$z_k = \frac{h_k^*}{\left|h_k\right|^2 + \sigma_k^2} \, y_k \,.$$

$h_k^*$ denotes the conjugate of the estimated channel for carrier $k$.

It has to be noted here that the $\sigma_k^2$ may be replaced by an estimate of the mean of the additive noise variances or by a predetermined value.

The output of the adaptive threshold determination and truncation module 305 may be provided to the noise plus interference power estimation module 303. The adaptive threshold determination and truncation module 305 determines the adaptive threshold according to the invention and truncates signals which are upper than this adaptive threshold according to the invention.

According to the invention, the received symbols in the frequency domain are truncated according to the following formula:

$$y_k = \rho_k e^{i\varphi_k} \ \text{if} \ \rho^2_k < T_d$$

$$y_k = \sqrt{T_d} \, e^{i\varphi_k} \ \text{if} \ \rho_k^{\,2} \geq T_d$$

with $i$ is the square root of '-1' in both above mentioned formulas, where $T_d$ is the threshold determined for truncating data according to the present invention, $\rho_k$ is the frequency-dependent received amplitude of the received symbol at carrier $k$ and $\varphi_k$ is the phase of the received symbol at carrier $k$.

The output $\sigma_k^2$ of the frequency dependent noise plus interference power estimation module 303 is provided to the equalization module 306.

The noise plus interference power estimation module 303 is for example as the one disclosed in the European patent application EP07005381.

The output of the adaptive threshold determination and truncation module 305 is provided to a channel estimation module 302 that estimates the channel responses for the carriers processed by the adaptive threshold determination and truncation module 305. The output of the channel estimation module 302 is provided to the equalization module 306.

The channel estimation is for example based and in a non limitative way on pilot symbols.

The output of the adaptive threshold determination and truncation module 305 is provided to the equalization module 306.

The output of the equalization module 306 is provided to an IDFT module 307 which may have a different size than the DFT module 300.

Classical Minimum Mean Square Error equalization process assumes a perfect knowledge of the channel. However, the channel estimation process is sensitive to the interferers. It must be noted that the interferer power can be much larger than the signal power.

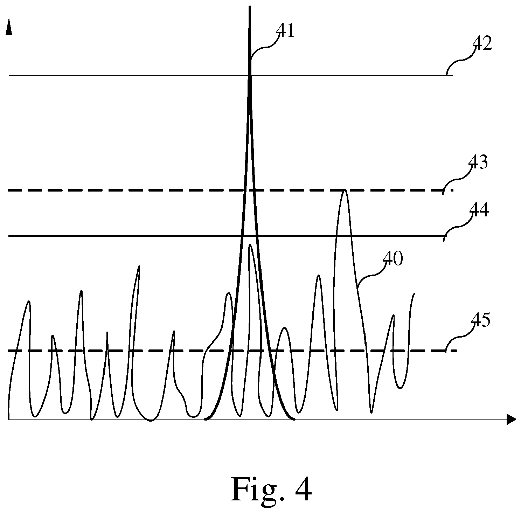

An example of interferer is given in reference to the Fig. 4.

**Fig. 4** represents an example of a received signal with narrow band interference.

The received signal with narrow band interference is represented in the frequency domain, i.e. once the DFT module 300 transforms the received symbols from the time domain to the frequency domain.

The horizontal axis represents the frequency and the vertical axis represents the power of signals received in the frequency bands.

The interference power 43 may be much larger than the signal and thermal noise power 45. If the interferer 41 is a pure sine, a good reception may be obtained with a signal over interference power ratio C/I of -10dB, i.e. with an interferer ten times more powerful than the signal.

As the present invention aims to truncate the interferer 41 as much as possible, while altering as few as possible signal and thermal noise 40, if no interferer is present, no degradation should be observed.

If the receiver sets up a threshold according to the received power Pt noted 43, the threshold 42 would be rather inefficient if the interferer power is large, as the threshold would be much higher than the signal plus noise power 45.

If the signal and thermal noise power 45 called Ps is known, then a threshold $T_d$ noted 44 of about Ps+4dB provides good performance. If the receiver Rec only knows the total power Pt, in order to be sure not to degrade the signal if there is no interferer, the receiver Rec must use a threshold of about T' = Pt + 4dB noted 42. If the interferer is high, Pt is much larger than Ps, and the threshold T' 42 is much larger than the optimum threshold T 44.

Therefore, the present invention estimates Ps prior defining the threshold.

The estimation is based on the frequency-dependent received power $p_k$.

For estimating the frequency-dependent received power $p_k$, the present invention may be implemented on a block basis, i.e. by using

$$p_k = \left| y_k \right|^2$$

The present invention may be implemented on averaging basis, for example by applying a filtering between successive (in time) values of $|y_k|^2$:

$$p_k = filtering\left( \left| y_k^j \right|^2 \right) = \sum_j a_j \left| y_k^j \right|^2$$

Where *j* is the time block index, a block being a set of samples over which the block demodulation, like DFT, processing in the frequency domain, IDFT is applied.

The $a_j$ values are the coefficients of the smoothing time filter.

Knowing the $p_k$ values, the estimation of $P_s$ is based on the following principle: the signal plus thermal noise has a Gaussian-like statistics in the frequency domain, while the interferers are 'peaks', and therefore much more sensitive to a threshold.

The estimation may be performed in an iterative way as follows:

A first estimate of the signal and thermal noise power $P_s$ is equal to the total received power $P_t$: $P_0 = P_t = \dfrac{1}{M} \sum_k p_k$ .

Where *M* is the size of the IDFT performed by the IDFT 307.

The powers $p_k$ are then truncated according to a threshold *T* which is set up with respect to the current power estimate, e.g. $T = P_0 + 3\ dB = 2P_0$ at first iteration and $T = P_i + 3\ dB = 2P_i$ after.

If $p_k \geq T$, then $p_k = T$ and if $p_k < T$, then $p_k = p_k$.

After truncation and an average of the truncated powers, a correction coefficient is applied to the average, the correction assumes that the symbols the powers of which are truncated follow a complex Gaussian law.

The value after correction corresponds to the new power estimate, $P_i$ for the $i^{th}$ iteration.

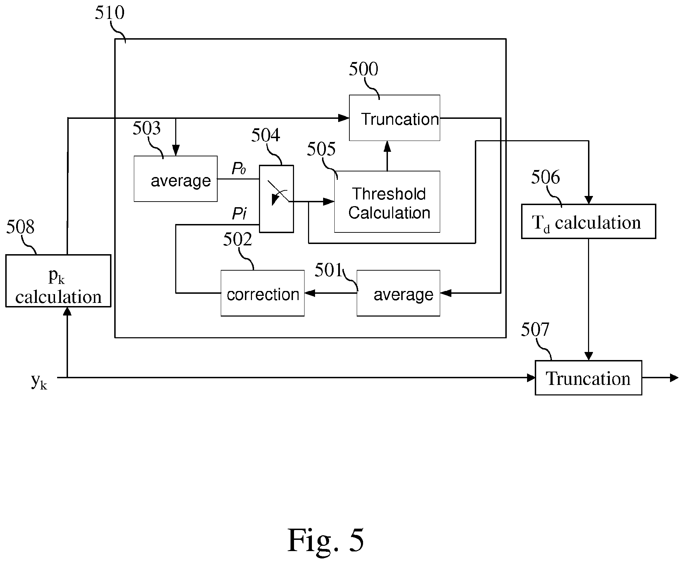

An example of the above mentioned estimation is given in reference to Fig. 5.

**Fig. 5** discloses a block diagram of components of the adaptive threshold determination and truncation module according to the present invention.

The adaptive threshold determination and truncation module 305 comprises a frequency dependent received power module 508 which determines the frequency-dependent received power $p_k$.

The present invention may be implemented on a block basis, i.e. by using

$$p_k = \left| y_k \right|^2$$

The adaptive threshold determination and truncation module 305 comprises an adaptive signal and thermal noise power determination module 510.

The adaptive signal and thermal noise power module 510 comprises an averaging module 503 which averages the total received power $P_t$ in order to calculate $P_0$: $P_0 = P_t = \dfrac{1}{M} \sum_k p_k$ .

The power $P_0$ is provided to a switch 504 which provides at the first iteration the power $P_0$, and once the first iteration is executed, a power $P_i$, where *i*=1 to *I-1*, *I* being the total number of iterations that the adaptive signal and thermal noise power determination module 510 executes. The threshold calculation module 505 determines a first threshold value which is for example equal to $T_0 = 2P_0$ and at following iterations determines a threshold $T_i = 2P_i$.

The threshold value $T_0$ and at following iterations $T_i$ are provided to a threshold application module 500 which truncates all signal powers which are upper than the threshold $T_0$ and at following iterations $T_i$ as follows:

if $p_k > T_i$ then $p_k = T_i$.

otherwise $p_k$ value is not modified.

The power values are provided to an averaging module 501 which averages the power values provided by the threshold application module 500.

The average value provided by the averaging module 501 is then provided to a correction module 502 which determines and applies a correction coefficient $\delta_i$.

The correction coefficient $\delta_0$ and at following iterations $\delta_i$ is applied to compensate for the power loss generated by the truncation of at least one power to the thresholds $T_0$ and $T_i$.

The calculation of the correction coefficient assumes that the signal the power of which is truncated is complex Gaussian.

For the *i*-th iteration, with *i*=0 to *I*-1 the correction coefficient $\delta_i$ is determined as follows.

If a signal is complex Gaussian of power *Pi*, then its power follows an exponential law of probability :

$$p(x) = \lambda_i\, e^{-\lambda_i x}$$

With parameter

$$\lambda_i = \frac{1}{P_i}$$

If the threshold $T_i$ is applied to the power of such a signal, than the average power decreases and the average output power $P_{AVi}$ is equal to:

$$P_{AVi} = \int_0^{T_i} x \, p_i(x) \, dx + T_i \int_{T_i}^{\infty} p_i(x) \, dx$$

$$\Rightarrow P_{AVi} = \lambda_i \int_0^{T_i} x \, e^{-\lambda_i x} dx + \lambda_i T_i \int_{T_i}^{\infty} e^{-\lambda_i x} dx$$

$$\Rightarrow P_{AVi} = \lambda_i \left\{ \left[ -\frac{1}{\lambda_i} x e^{-\lambda_i x} \right]_0^{T_i} + \frac{1}{\lambda_i} \int_0^{T_i} e^{-\lambda_i x} dx \right\} + \lambda_i T_i \left| -\frac{1}{\lambda_i} e^{-\lambda_i x} \right|_{T_i}^{\infty}$$

$$\Rightarrow P_{AVi} = -T_i e^{-\lambda_i T_i} + \left[ -\frac{1}{\lambda_i} e^{-\lambda_i x} \right]_0^{T_i} + T_i e^{-\lambda_i T_i} = \frac{1}{\lambda_i} - \frac{1}{\lambda_i} e^{-\lambda_i T_i}$$

And therefore

$$P_{AVi} = \frac{1}{\lambda_i} \left( 1 - e^{-\lambda_i T_i} \right)$$

It can be expressed with respect to $P_i$:

$$P_{AVi} = P_i \left( 1 - e^{-T_i / P_i} \right)$$

The multiplicative corrective term is equal to:

$$\delta_i = \frac{P_i}{P_{AVi}} = \frac{1}{1 - e^{-T_i / P_i}}$$

As $P_{AVi}$ and $T_i$ are known, $P_i$ is derived by solving equation $P_{AVi} = P_i \left( 1 - e^{-T_i / P_i} \right)$ for example by applying the fixed-point theorem.

According to a preferred mode of realization of the present invention, a look-up table is used for the calculation of $\delta_i$ or directly $P_i$ from $P_{AVi}$ and $T_i$. In this mode of realization, the above formulas are used to fill in the look-up table.

The corrected signal power is provided to the switching module 504, which provides it to the threshold calculation module 505 instead of the power $P_0$.

For example, the number of iterations may be equal to three to five.

At last iteration the power $P_s$ is equal to the power $P_i$ determined at last iteration and the threshold $T_d$ is determined by a threshold calculation module 506 as equal, for example to the power $P_s$ determined at last iteration plus four dB.

The threshold $T_d$ is provided to a data truncation module 507 which truncates the amplitudes of the received symbols in the frequency domain according to the following rule:

$$y_k = \rho_k e^{i\varphi_k} \ \text{if} \ \rho^2_k < T_d$$

$$y_k = \sqrt{T_d}\, e^{i\varphi_k} \ \text{if} \ \rho_k^{\ 2} \geq T_d$$

where $i$ is the square root of '-1' in both above mentioned formulas.

The received symbols processed by the data truncation module 507 are then provided to the channel estimation module 302 and to the equalization module 306.

**Fig. 6** discloses an example of an algorithm executed by a destination according to the present invention.

The present algorithm is more precisely executed by the processor 200 of the receiver Rec.

At step S600, the processor 200 commands the synchronisation module 301 to synchronise the DFT module 300 on the received symbols. The received symbols are obtained by transforming the received single carrier signal into received symbols.

At next step S601, the processor 200 commands the DFT module 300 to transform the received symbols from the time domain to the frequency domain into received symbols in the frequency domain $y_k$ where $k$ denotes the index of subcarrier.

The received symbols in the frequency domain may be represented by:

$$y_k = h_k x_k + \upsilon_k$$

At next step S602, the received symbols in the frequency domain are provided to the adaptive threshold determination and truncation module 305 and more precisely to the frequency dependent received power module 508 which determines the frequency-dependent received power $p_k$. The present invention may be implemented on a block basis, i.e. by using

$$p_k = \left| y_k \right|^2$$

At next step S603, the determined powers are provided to the adaptive signal and thermal noise power determination module 510 which performs an adaptive signal and thermal noise power determination as disclosed in reference to Fig. 5 in order to provide the signal and thermal noise power $P_s$ estimate.

At next step S604, the threshold $T_d$ is determined as equal, for example to the signal and thermal noise power $P_s$ plus four dB. The threshold $T_d$ is then used for truncating the amplitudes of the received symbols in the frequency domain according to the following formula:

$$y_k = \rho_k e^{i\varphi_k} \ \text{if} \ \rho^2_k < T_d$$

$$y_k = \sqrt{T_d}\, e^{i\varphi_k} \ \text{if} \ \rho_k^{\ 2} \geq T_d$$

where $i$ is the square root of '-1' in both above mentioned formulas.

At next step S606, the truncated received symbols are provided to the channel estimation module 302 which performs a channel estimation.

At step S605, the processor 200 commands the noise plus interference power estimation module 303 to estimate the frequency dependent noise plus interference powers $\sigma_k^2$.

The noise plus interference power estimation module 303 uses the received symbols in the frequency domain or according to a variant uses the truncated received symbols in order to perform the frequency dependent noise plus interference power estimation.

At next step S607, the processor 200 commands the equalization. The equalization is performed using the channel estimates provided at step S606, possibly the frequency dependent noise plus interference power estimation provided at step S605 and the symbols outputted at step S604.

The equalization equalizes in the frequency domain. For example the equalization is a MMSE equalization and provides samples expressed by:

$$z_k = \frac{h_k^*}{|h_k|^2 + \sigma_k^2} y_k.$$

At next step S608, an IDFT transform is performed on samples provided by the equalization step S607.

Naturally, many modifications can be made to the embodiments of the invention described above without departing from the scope of the present invention.

## Claims

1. Method for cancelling a narrow band interference in a single carrier signal, **characterized in that** the method comprises the steps executed by a receiver of:

   - receiving the single carrier signal and transforming the single carrier signal into received symbols,
   - transforming the received symbols from the time domain to the frequency domain into received symbols in the frequency domain,
   - estimating the frequency-dependent received powers of received symbols in the frequency domain (508),
   - executing a first averaging of the frequency-dependent_received powers of the received symbols in the frequency domain (503),
   - determining, at a first iteration, a threshold $T_0$ based on the averaged frequency-dependent received power $P_0$ (505),
   - truncating all powers of the received symbols in the frequency domain which are upper than the determined threshold at the first iteration by setting the signal power to said threshold (5 0 0),
   - executing a second averaging of the truncated or not powers (501),
   - correcting the second average $P_{AV1}$ by a correction coefficient (502),
   - determining at a following iteration a following adaptive threshold $T_i$ based on the corrected average,
   - truncating all powers of the received symbols in the frequency domain which are upper than the following adaptive threshold $T_i$ by setting the signal power to said threshold (500),
   - executing a third averaging of the truncated or not powers,
   - correcting the third average $P_{AV2}$ by a correction coefficient, and executing a predetermined number of times, the adaptive threshold determination, the truncating, the third averaging and the correcting in order to determine an adaptive signal and thermal noise power from the estimated frequency dependent receive powers, where the multiplicative correction coefficient at the i-th iteration is

   $$\delta_i = \frac{P_i}{P_{AVi}} = \frac{1}{1 - e^{-\frac{T_i}{P_i}}},$$

   where $P_{AVi}$ is the average power after truncation and $P_i$ can be derived by solving equation

   $$P_{AVi} = P_i \left( 1 - e^{-\frac{T_i}{P_i}} \right),$$

   - truncating the amplitudes of the received symbols in the frequency domain based on the threshold $T_d$ determined in the last iteration according to the following rule

   $$y_k = \rho_k e^{i\varphi_k} \; if \; \rho_k^2 < T_d$$

$$y_k = \sqrt{T_d}\, e^{i\varphi_k} \; if \; \rho_k^2 > T_d,$$

where $\rho_k$ is the amplitude of a received symbol and $\varphi_k$ its phase,
- performing a channel estimation based on the truncated received symbols in the frequency domain.

2. Method according to claim 1, **characterized in that** the coefficients are determined using a lookup table.

3. Method according to any of the claims 1 to 2, **characterized in that** the single carrier signal is a single carrier orthogonal frequency division multiplex modulation signal.

4. Method according to any of the claims 1 to 3, **characterized in that** the method further comprises the steps of:

   - performing a frequency dependent noise plus interference power estimation based on the received symbols transformed from the time domain to the frequency domain into received symbols in the frequency domain or based on the truncated received symbols in the frequency domain.

5. Method according to claims 3, **characterized in that** the method comprises further step of performing a minimum mean square error equalization based on the channel estimation, based on the truncated received symbols in the frequency domain and based on the frequency dependent noise plus interference power estimation.

6. Device for cancelling a narrow band interference in a single carrier signal, **characterized in that** the device is included in a receiver and comprises :

   - means for receiving the single carrier signal and transforming the single carrier signal into received symbols,
   - means for transforming the received symbols from the time domain to the frequency domain into received symbols in the frequency domain,
   - means for estimating the frequency-dependent received powers of received symbols in the frequency domain,
   - means for executing a first averaging of the frequency-dependent received powers of the received symbols in the frequency domain,
   - means for determining, at a first iteration, a threshold $T_0$ based on the averaged frequency-dependent received power $P_0$,
   - means for truncating all powers of the received symbols in the frequency domain which are upper than the determined threshold at the first iteration by setting the signal power to said threshold,
   - means for executing a second averaging of the truncated or not powers,
   - means for correcting the second average $P_{AV1}$ by a correction coefficient,
   - means for determining at a following iteration a following adaptive threshold $T_i$ based on the corrected average,
   - means for truncating all powers which are upper than the following adaptive threshold,
   - means for executing a third averaging of the truncated or not powers,
   - correcting the third average $P_{AV2}$ bby a correction coefficient, and executing a predetermined number of times, the adaptive threshold determination, the truncating, the third averaging and the correcting in order to determine an adaptive signal and thermal noise power from the estimated frequency dependent receive powers, where the correction coefficient at the i-th iteration is

$$\delta_i = \frac{P_i}{P_{AVi}} = \frac{1}{1 - e^{-\frac{T_i}{P_i}}},$$

where $P_{AVi}$ is the average power after truncation and $P_i$ can be derived by solving equation

$$P_{AVi} = P_i\left(1 - e^{-\frac{T_i}{P_i}}\right),$$

   - means for truncating the amplitudes of the received symbols in the frequency domain based on the threshold $T_d$ determined in the last iteration according to the following rule

$$y_k = \rho_k e^{i\varphi_k} \; if \; \rho_k^2 < T_d$$

$$y_k = \sqrt{T_d}\, e^{i\varphi_k} \; if \; \rho_k^2 > T_d,$$

- means for performing a channel estimation based on the truncated received symbols in the frequency domain.

7. Computer program which loadable directly into a programmable device, comprising instructions or portions of code for implementing the steps of the method according to claims 1 to 5, when said computer program is executed on a programmable device.

**Patentansprüche**

1. Verfahren zum Löschen einer Schmalbandinterferenz in einem Einzelträgersignal, **dadurch gekennzeichnet, dass** das Verfahren die durch einen Empfänger ausgeführten folgenden Schritte umfasst:

- Empfangen des Einzelträgersignals und Transformieren des Einzelträgersignals in empfangene Symbole,
- Transformieren der empfangenen Symbole aus dem Zeitbereich zum Frequenzbereich in empfangene Symbole im Frequenzbereich,
- Schätzen der frequenzabhängigen empfangenen Leistungen der empfangenen Symbole im Frequenzbereich (508),
- Ausführen einer ersten Mittelung der frequenzabhängigen empfangenen Leistungen der empfangenen Symbole im Frequenzbereich (503),
- Bestimmen, bei einer ersten Iteration, einer Schwelle $T_0$ basierend auf der gemittelten frequenzabhängigen empfangenen Leistung $P_0$ (505),
- Drosseln aller Leistungen der empfangenen Symbole im Frequenzbereich, die höher als die bei der ersten Iteration bestimmte Schwelle sind, durch Einstellen der Signalleistung auf die Schwelle (500),
- Ausführen einer zweiten Mittelung der Leistungen, die gedrosselt sind oder nicht (501),
- Korrigieren der zweiten Mittelung $P_{AV1}$ durch einen Korrekturkoeffizienten (502),
- Bestimmen, bei einer folgenden Iteration, einer folgenden adaptiven Schwelle $T_i$ basierend auf der korrigierten Mittelung,
- Drosseln aller Leistungen der empfangenen Symbole im Frequenzbereich, die höher als die folgende adaptive Schwelle $T_i$ sind, durch Einstellen der Signalleistung auf die Schwelle (500),
- Ausführen einer dritten Mittelung der Leistungen, die gedrosselt sind oder nicht,
- Korrigieren der dritten Mittelung $P_{AV2}$ durch einen Korrekturkoeffizienten und Ausführen, für eine vorbestimmte Anzahl von Malen, der Bestimmung der adaptiven Schwelle, des Drosselns, der dritten Mittelung und des Korrigierens, um ein adaptives Signal und eine thermische Rauschleistung aus den geschätzten frequenzabhängigen empfangenen Leistungen zu bestimmen, wobei der multiplikative Korrekturkoeffizient bei der i-ten Iteration folgender ist:

$$\delta_i = \frac{P_i}{P_{AVi}} = \frac{1}{1 - e^{\frac{T_i}{P_i}}},$$

wobei $P_{AVi}$ die Mittelungs- bzw. Durchschnittsleistung nach einer Drosselung ist und $P_i$ durch Lösen der folgenden Gleichung abgeleitet werden kann:

$$P_{AVi} = P_i \left( 1 - e^{\frac{T_i}{P_i}} \right),$$

- Drosseln der Amplituden der empfangenen Symbole im Frequenzbereich basierend auf der Schwelle $T_d$, die in der letzten Iteration bestimmt ist, gemäß der folgenden Regel:

$$y_k = \rho_k e^{i\varphi_k} \; wenn \; \rho_k^2 < T_d$$

$$y_k = \sqrt{T_d}\rho_k e^{i\varphi_k} \; wenn \; \rho_k^2 > T_d,$$

wobei $\rho_k$ die Amplitude eines empfangenen Symbols ist und $\varphi_k$ seine Phase ist,
- Durchführen einer Kanalschätzung basierend auf den gedrosselten empfangenen Symbolen im Frequenzbereich.

2. Verfahren nach Anspruch 1, **dadurch gekennzeichnet, dass** die Koeffizienten unter Verwendung einer Nachschautabelle bestimmt werden.

3. Verfahren nach einem der Ansprüche 1 bis 2, **dadurch gekennzeichnet, dass** das Einzelträgersignal ein Signal eines orthogonalen Frequenzmultiplexverfahrens mit Einzelträgermodulation ist.

4. Verfahren nach einem der Ansprüche 1 bis 3, **dadurch gekennzeichnet, dass** das Verfahren weiterhin die folgenden Schritte umfasst:

   - Durchführen einer frequenzabhängigen Rauschen-plus-Interferenz-Leistungsschätzung basierend auf den empfangenen Symbolen, die aus dem Zeitbereich zum Frequenzbereich in empfangene Symbole im Frequenzbereich transformiert sind, oder basierend auf den gedrosselten empfangenen Symbolen im Frequenzbereich.

5. Verfahren nach Anspruch 3, **dadurch gekennzeichnet, dass** das Verfahren weiterhin einen Schritt zum Durchführen einer Entzerrung basierend auf minimalem mittleren Fehlerquadrat basierend auf der Kanalschätzung, basierend auf den gedrosselten empfangenen Symbolen im Frequenzbereich und basierend auf der frequenzabhängigen Rauschen-plus-Interferenz-Leistungsschätzung.

6. Vorrichtung zum Löschen einer Schmalbandinterferenz in einem Einzelträgersignal, **dadurch gekennzeichnet, dass** die Vorrichtung in einem Empfänger enthalten ist und folgendes umfasst:

   - Mittel zum Empfangen des Einzelträgersignals und Transformieren des Einzelträgersignals in empfangene Symbole,
   - Mittel zum Transformieren der empfangenen Symbole aus dem Zeitbereich zum Frequenzbereich in empfangene Symbole im Frequenzbereich,
   - Mittel zum Schätzen der frequenzabhängigen empfangenen Leistungen der empfangenen Symbole im Frequenzbereich,
   - Mittel zum Ausführen einer ersten Mittelung der frequenzabhängigen empfangenen Leistungen der empfangenen Symbole im Frequenzbereich,
   - Mittel zum Bestimmen, bei einer ersten Iteration, einer Schwelle $T_0$ basierend auf der gemittelten frequenzabhängigen empfangenen Leistung $P_0$,
   - Mittel zum Drosseln aller Leistungen der empfangenen Symbole im Frequenzbereich, die höher als die bei der ersten Iteration bestimmte Schwelle sind, durch Einstellen der Signalleistung auf die Schwelle,
   - Mittel zum Ausführen einer zweiten Mittelung der Leistungen, die gedrosselt sind oder nicht,
   - Mittel zum Korrigieren der zweiten Mittelung $P_{AV1}$ durch einen Korrekturkoeffizienten,
   - Mittel zum Bestimmen, bei einer folgenden Iteration, einer folgenden adaptiven Schwelle $T_i$ basierend auf der korrigierten Mittelung,
   - Mittel zum Drosseln aller Leistungen, die höher als die folgende adaptive Schwelle sind,
   - Mittel zum Ausführen einer dritten Mittelung der Leistungen, die gedrosselt sind oder nicht,
   - Korrigieren der dritten Mittelung $P_{AV2}$ durch einen Korrekturkoeffizienten und Ausführen, für eine vorbestimmte Anzahl von Malen, der Bestimmung der adaptiven Schwelle, des Drosselns, der dritten Mittelung und des Korrigierens, um ein adaptives Signal und eine thermische Rauschleistung aus den geschätzten frequenzabhängigen empfangenen Leistungen zu bestimmen, wobei der multiplikative Korrekturkoeffizient bei der i-ten Iteration folgender ist:

$$\delta_i = \frac{P_i}{P_{AVi}} = \frac{1}{1 - e^{\frac{T_i}{P_i}}},$$

wobei $P_{AVi}$ die Mittelungs- bzw. Durchschnittsleistung nach einer Drosselung ist und $P_i$ durch Lösen der folgenden Gleichung abgeleitet werden kann:

$$P_{AVi} = P_i \left( 1 - e^{\frac{T_i}{P_i}} \right),$$

- Mittel zum Drosseln der Amplituden der empfangenen Symbole im Frequenzbereich basierend auf der Schwelle $T_d$, die in der letzten Iteration bestimmt ist, gemäß der folgenden Regel:

$$y_k = \rho_k e^{i\varphi_k} \; wenn \; \rho_k^2 < T_d$$

$$y_k = \sqrt{T_d} \rho_k e^{i\varphi_k} \; wenn \; \rho_k^2 > T_d,$$

- Mittel zum Durchführen einer Kanalschätzung basierend auf den gedrosselten empfangenen Symbolen im Frequenzbereich.

7. Computerprogramm, das direkt ladbar in eine programmierbare Vorrichtung ist, umfassend Anweisungen oder Teilbereiche eines Codes zum Implementieren der Schritte des Verfahrens nach den Ansprüchen 1 bis 5, wenn das Computerprogramm auf einer programmierbaren Vorrichtung ausgeführt wird.


**Revendications**

1. Procédé d'annulation d'une interférence à bande étroite dans un signal à porteuse unique, **caractérisé en ce que** le procédé comporte les étapes exécutées par un récepteur de :

   - réception du signal à porteuse unique et transformation du signal à porteuse unique en symboles reçus,
   - transformation des symboles reçus du domaine temporel au domaine fréquentiel en symboles reçus dans le domaine fréquentiel,
   - estimation dans le domaine fréquentiel (508) des puissances reçues des symboles reçus dépendantes de la fréquence,
   - exécution d'une première moyenne des puissances reçues des symboles reçus dépendantes de la fréquence (503),
   - détermination, lors d'une première itération, d'un seuil $T_0$ basé sur la moyenne de puissance reçue $P_0$ dépendante de la fréquence (505),
   - troncation de toutes les puissances dans le domaine fréquentiel des symboles reçus qui sont supérieures au seuil déterminé à la première itération en fixant la puissance du signal audit seuil (500),
   - exécution d'un seconde moyenne des puissances tronquées ou non (501),
   - correction de la seconde moyenne $P_{AV1}$ par un coefficient de correction (502),
   - détermination à une itération suivante d'un seuil adaptatif suivant $T_i$ basé sur la moyenne corrigée,
   - troncation de toutes les puissances dans le domaine fréquentiel des symboles reçus qui sont supérieures au seuil adaptatif suivant $T_i$ en fixant la puissance du signal audit seuil (500),
   - exécution d'une troisième moyenne des puissances tronquées ou non,
   - correction de la troisième moyenne $P_{AV2}$ par un coefficient de correction, et exécution un nombre prédéterminé de fois, de la détermination adaptative du seuil, de la troncature, de la troisième moyenne et de la correction afin de déterminer un signal adaptatif et une puissance de bruit thermique à partir des puissances reçues dépendantes de la fréquence, où le coefficient de correction multiplicatif à la i-ième itération est

$$\delta_i = \frac{P_i}{P_{AVi}} = \frac{1}{1 - e^{-T_i/P_i}}$$

où $P_{AVi}$ est la puissance moyenne après troncature et $P_i$ peut être dérivé en résolvant l'équation,

$$P_{AVi} = P_i \left( 1 - e^{-T_i/P_i} \right),$$

- troncation des amplitudes des symboles reçus dans le domaine fréquentiel en fonction du seuil $T_d$ déterminé lors de la dernière itération selon la règle suivante

$$y_k = \rho_k e^{i\varphi_k} \text{ si } \rho^2_k < T_d$$

$$y_k = \sqrt{T_d} e^{i\varphi_k} \text{ si } \rho_k^2 \geq T_d$$

où $\rho_k$ est l'amplitude d'un symbole reçu et $\varphi_k$ sa phase,
- exécution d'une estimation de canal sur la base des symboles reçus tronqués dans le domaine fréquentiel.

2. Procédé selon la revendication 1, **caractérisé en ce que** les coefficients sont déterminés à l'aide d'une table de correspondance.

3. Procédé selon l'une quelconque des revendications 1 à 2, **caractérisé en ce que** le signal à porteuse unique est un signal de modulation multiplex à répartition de fréquence orthogonale mono porteuse.

4. Procédé selon l'une quelconque des revendications 1 à 3, **caractérisé en ce que** le procédé comporte en outre les étapes de :

   - exécution d'une estimation du bruit et de la puissance d'interférence dépendant de la fréquence sur la base des symboles reçus transformés du domaine temporel au domaine fréquentiel en symboles reçus dans le domaine fréquentiel ou sur la base des symboles reçus tronqués dans le domaine fréquentiel.

5. Procédé selon la revendication 3, **caractérisé en ce que** le procédé comporte en outre l'étape de réalisation d'une égalisation d'erreur quadratique moyenne minimale basée sur l'estimation de canal, basée sur les symboles reçus tronqués dans le domaine fréquentiel et basée sur l'estimation de la puissance d'interférence plus bruit.

6. Dispositif d'annulation d'une interférence à bande étroite dans un signal à porteuse unique, **caractérisé en ce que** le dispositif est compris dans un récepteur et comporte :

   - des moyens de réception du signal à porteuse unique et de transformation du signal à porteuse unique en symboles reçus,
   - des moyens de transformation des symboles reçus du domaine temporel au domaine fréquentiel en symboles reçus dans le domaine fréquentiel,
   - des moyens d'estimation dans le domaine fréquentiel des puissances reçues des symboles reçus dépendantes de la fréquence,
   - des moyens d'exécution d'une première moyenne des puissances reçues des symboles reçus dépendantes de la fréquence,
   - des moyens de détermination, lors d'une première itération, d'un seuil $T_0$ basé sur la moyenne de puissance reçue dépendante de la fréquence $P_0$,
   - des moyens de troncation de toutes les puissances dans le domaine fréquentiel des symboles reçus qui sont supérieures au seuil déterminé à la première itération en fixant la puissance du signal audit seuil,
   - des moyens d'exécution d'un seconde moyenne des puissances tronquées ou non,

- des moyens de correction de la seconde moyenne $P_{AV1}$ par un coefficient de correction,
- des moyens de détermination à une itération suivante d'un seuil adaptatif suivant $T_i$ basé sur la moyenne corrigée,
- des moyens de troncation de toutes les puissances supérieures au seuil adaptatif suivant,
- des moyens d'exécution d'une troisième moyenne des puissances tronquées ou non,
- correction de la troisième moyenne $P_{AV2}$ par un coefficient de correction, et exécution un nombre prédéterminé de fois, de la détermination adaptative du seuil, de la troncature, de la troisième moyenne et de la correction afin de déterminer un signal adaptatif et une puissance de bruit thermique à partir des puissances reçues dépendantes de la fréquence, où le coefficient de correction multiplicatif à la i-ième itération est

$$\delta_i = \frac{P_i}{P_{AVi}} = \frac{1}{1 - e^{-T_i/P_i}}$$

où $P_{AVi}$ est la puissance moyenne après troncature et $P_i$ peut être dérivé en résolvant l'équation,

$$P_{AVi} = P_i \left( 1 - e^{-T_i/P_i} \right),$$

- des moyens de troncation des amplitudes des symboles reçus dans le domaine fréquentiel en fonction du seuil $T_d$ déterminé lors de la dernière itération selon la règle suivante

$$y_k = \rho_k e^{i\varphi_k} \ \text{si} \ \rho^2_k < T_d$$

$$y_k = \sqrt{T_d} e^{i\varphi_k} \ \text{si} \ \rho_k^2 \geq T_d$$

- des moyens d'exécution d'une estimation de canal sur la base des symboles reçus tronqués dans le domaine fréquentiel.

7. Programme d'ordinateur directement chargeable dans un dispositif programmable, comprenant des instructions ou portions de code pour la mise en œuvre des étapes du procédé selon les revendications 1 à 7, lorsque ledit programme d'ordinateur est exécuté sur un dispositif programmable.

Src

Source

Rec

## Fig. 1

Rec

200

Processor

203

RAM

202

ROM

201

Wireless I/F

205

## Fig. 2

301

Synchronization

302

Channel estimation

DFT

300

305

Adaptive threshold
determination
and truncation

Equalization

306

Noise plus
Interference
Power
estimation

IDFT$_M$

307

303

Fig. 3

Fig. 4

Fig. 5

S600 — Synchronization

S601 — DFT

S602 — Power calculation

S603 — $P_s$ determination

S604 — $T_d$ calculation and Truncation

S605 — Noise plus interference power estimation

S606 — Channel estimation

S607 — Equalization

S608 — IDFT

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 07005381 A

**Non-patent literature cited in the description**

- **YAO RUGUI.** 16th international conference on advance communication technology global IT research institute. 16 February 2014